# EUROPEAN PATENT SPECIFICATION

(11) **EP 0 554 454 B1**
(45) Date of publication and mention of the grant of the patent: **15.05.1996**
(21) Application number: 91917826.9
(22) Date of filing: 16.10.1991
(51) Int. Cl.: B62D 55/253, B62D 55/24, B62D 55/20

(54) **CORE BAR OF RUBBER CRAWLER AND CRAWLER**
KERNSTAB EINER GUMMIGLEISKETTE UND GLEISKETTE
BARRE CENTRALE DE CHENILLE EN CAOUTCHOUC ET CHENILLE

(30) Priority: 18.10.1990 JP 109474/90 U
(43) Date of publication of application: 11.08.1993
(73) Proprietor: FUKUYAMA GOMU KOGYO KABUSHIKI KAISHA, Fukuyama-shi, Hiroshima-ken 720 (JP)
(72) Inventor: KATOH, Yusaku, 2801-4, Yamate-cho, Hiroshima-ken 720 (JP)
(74) Representative: Blumbach, Kramer & Partner
(86) International application number: PCT/JP91/01415
(87) International publication number: WO 92/06884

(56) References cited:
- EP-A- 0 428 725
- JP-U- 1 173 091
- JP-U- 2 040 683
- JP-Y- 2 026 781

## Description

### [FIELD OF THE INVETION]

The present invention relates to a rubber crawler to be attached to an under-carriage of a traveling construction machine.

### [BACKGROUND OF THE INVENTION]

It is a steel caterpillar that has been mainly attached to an under-carriage of a traveling construction machine, but in recent years a rubber crawler has been applied as well.

Fig. 9 shows a conventional rubber crawler 16 on which an idler wheel 19 is rolling. The reference numeral 11 is a core bar. 12, 13 and 14 are a wing portion, a protruding part to prevent disengagements of a wheel, and an engaging part with a driving wheel, of the core bar 11 respectively. 17 is a steel cord, 18 is an engaging hole, 19c is a center rolling part of the idler wheel 19. As shown in this figure, the center rolling part 19c travels between protruding parts 13, 13 so that disengagements of the wheel could be prevented.

To compare with a steel crawler, the above rubber crawler has such a disadvantage that disengagements of the crawler may easily happen. This is mainly because the rubber crawler is partially twisted to thereby disengage from the wheel, when it turns on a stepped ground in the workshop. Fig. 10 shows the disengagement of the wheel. The crawler is slided sideways between the adjacent core bars 11, 11, and therefore the center rolling part 19c of the idler wheel 19 runs on the protruding part 13 to thereby cause the disengagement 20 of the wheel from the crawler.

To overcome this problem, it may be considered to increase the width-wise strength of the rubber crawler.

Then, if the interval of core bars in the rubber crawler is narrowed as the width thereof is broadened in order to increase the strength of the rubber crawler, the widthwise edge portions of each core bar become angulate at their turning point, which makes the rubber crawler into a polygonal shape. Accordingly, the rubber crawler comes to suffer much bending fatigue, and thereofre its durability decreases.

On the other hand, if a short-pitched rubber crawler (wherein the core bars' interval is half of the conventional rubber crawler's by embedding core bars of narrower width arranged for said interval) is applied in order to increase the strength, it is excellent in preventing disengagements of a wheel because of the narrower interval of the embedded core bars than a conventional rubber crawler's, and is excellent in the durability as well. However, this has not become a perfect means yet, but still causes disengagements of the crawler in a large-sized construction machine.

A core bar according to the preamble of the appended claim 1 is disclosed in JP-U-01-173091. In this known core bar a convex face and a concave face are provided on the tips of a horizontal plate which works as a rolling track for a wheel, and the convex face and the concave face engage with each other between adjacent core bars. This core bar, wherein the engaging part forms parts of a rolling track for a wheel, may be useful on a flat road. But when it comes to a rough road there is a risk for the engaging part swaying back and forward or right and left which may lead to disorder of the rolling track for a wheel. Accordingly, the wheel may not roll on it smoothly or even cannot roll there at all.

### [Detailed Description of the Invention]

It is therefore an object of the present invention to overcome the above-mentioned problems and to provide a core bar of a rubber crawler, which enables the design of a rubber crawler allowing a smooth rolling of the wheel, even on a rough road. Furthermore, it is an object of the invention to provide a rubber crawler which allows a smooth rolling of a wheel, even when it comes to a rough road.

A core bar of a rubber crawler according to the appended claim 1 provides a solution for the first mentioned object of the invention.

The appended subclaims 2 to 10 are characterizing advantageous embodiments of the inventive core bar.

A rubber crawler according to appended claim 11 provides a solution for the further object of the invention as mentioned before.

Appended claims 12 to 14 are directed towards advantageous embodiments of the inventive rubber crawler.

In this inventive rubber crawler, even when the rubber crawler may be in a condition to slide sideways, each horizontal projection of the adjacent core bars of the rubber crawler in the crawler body runs against each other in the width direction to thereby prevent sideways sliding of the rubber crawler and consequently disengagements of a wheel. Since the horizontal projections are disposed in the vicinity of the layer of the steel cords, even when the rubber crawler may be bent to the inner or outer peripheral side, the horizontal projections can keep a suitable overlapped part to thereby cause no trouble in travelling or operating motions. Especially with the embodiment of the inventive rubber crawler according to appended claim 14, even when the outer force to separate the core bars may be given, the separation of the core bars does not occur because of engagements of the hooks, thereby preventing the separations of the core bars from the rubber crawler. Accordingly, the durability of the rubber crawler greatly increases.

### [BRIEF DESCRIPTION OF THE DRAWINGS]

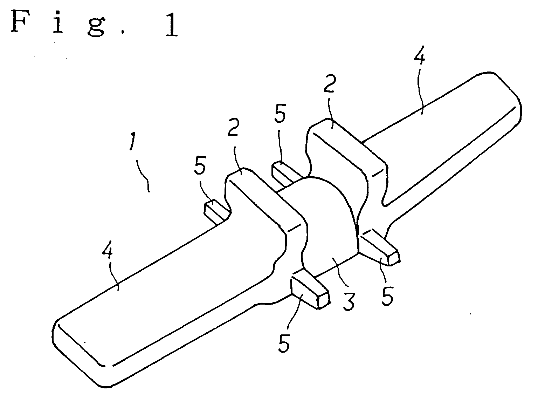

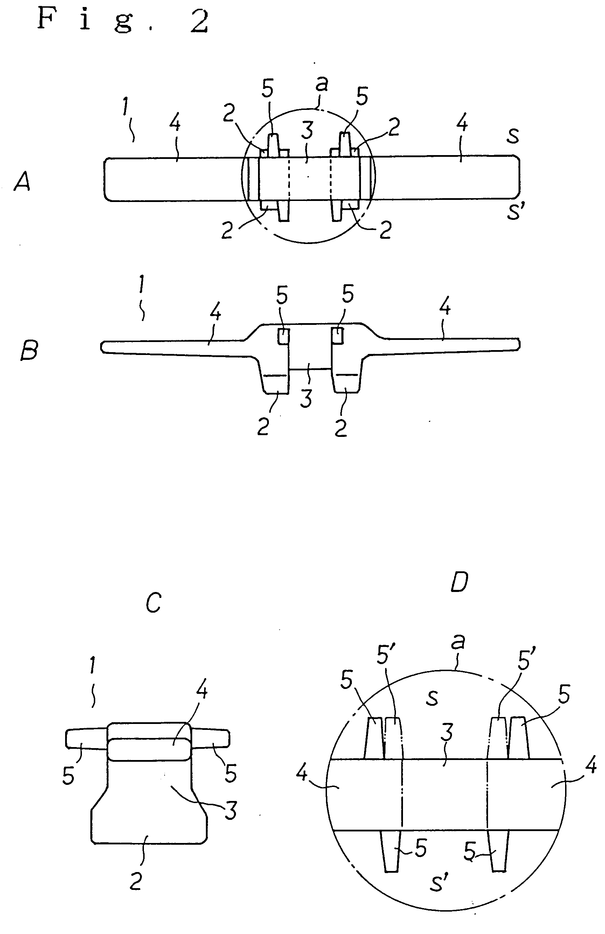

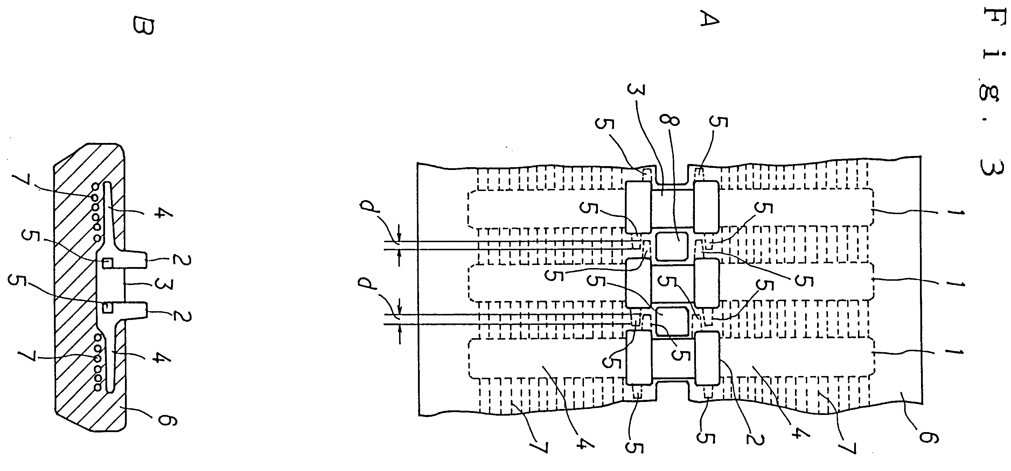

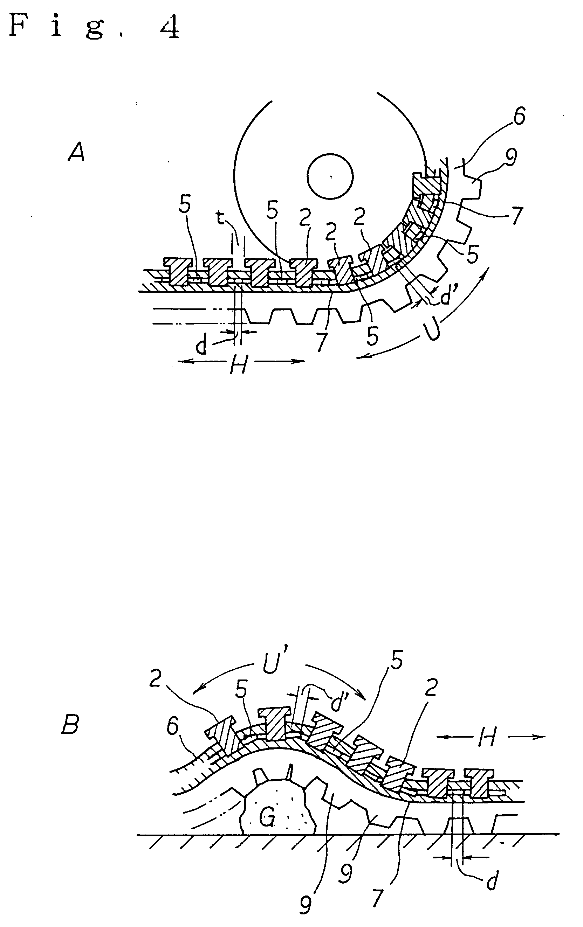

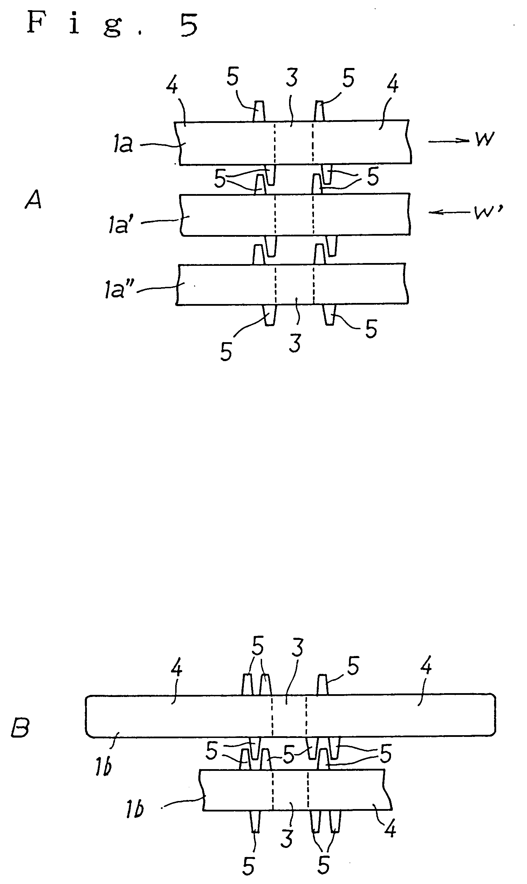

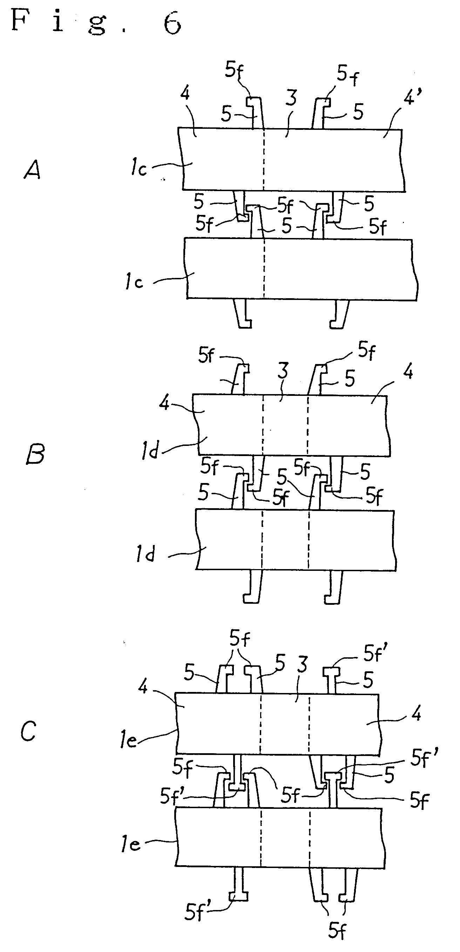

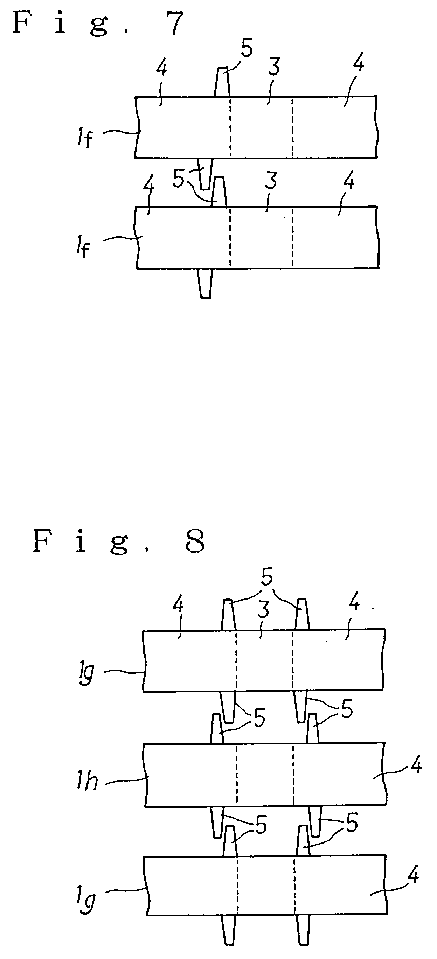

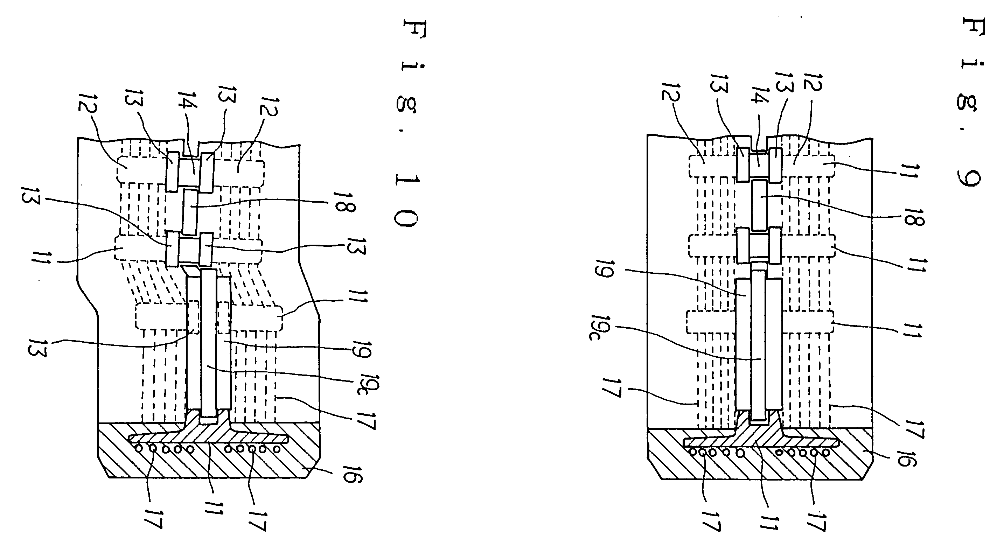

Fig. 1 is a perspective view of a core bar of the first embodiment according to the present invention. Figs. 2A, 2B and 2C are a bottom face view, a side elevational view in the width direction and the same in the length direction, of a core bar of the first embodiment respectively. Fig. 2D is a partially enlarged view of a circle "a" in Fig. 2A. Figs. 3A and 3B are a plane view and a sectional view of the rubber crawler, respectively, wherein the core bars according to the first embodiment are embedded. Figs. 4A and 4B explain about the intervals of overlapped horizontal projections in bending parts. Figs. 5A and 5B show the second and the third embodiments of the core bars according to the present invention, respectively. Figs. 6A, 6B and 6C show the forth, the fifth and the sixth embodiments of the core bars according to the present invention, respectively. Figs. 7 and 8 show another embodiments of the core bars according to the present invention. Figs. 9 and 10 show conventional examples.

### [PREFERRED EMBODIMENTS OF THE PRESENT INVENTION]

First of all, the first embodiment is explained with Figs. 1∼4. In Fig. 1, the reference numeral 1 is a core bar, 2 is a projection to prevent disengagements of a wheel, 3 is an engaging part with a driving wheel, 4 is a wing portion and 5 is a horizontal projection. As shown in this figure, horizontal projections 5, 5 . . . are provided on the both sides of the engaging part 3, which is located in the middle of the lengthwise core bar, in the direction perpendicular to the widthwise side faces at the about same level of the wing portions of the core bar on the respective side faces thereof.

The positional relation of the respective horizontal projections 5 . . . provided on the both side faces of the widthwise core bar is explained with Figs. 2A and 2D. The imaginary positions 5', 5' described by two-dot chain lines beside the respective horizontal projections 5, 5 on the side face S are in a right symmetrical position with the horizontal projections 5,5 on the side face S' (a symmetrical relation for the center of the core bar). Besides, as shown in Figs. 2B and 2C, the bottom face of the engaging part 3 and both sides thereof is thickened for disposing the horizontal projections 5 to the closest possible side to the bottom face.

The core bars 1 of the above structure are embedded completely deep into the rubber crawler, as shown in Fig. 3A. At this time, the facing horizontal projections 5, 5 between the adjacent core bars 1, 1 are overlapped in the width direction of the core bar 1, and the overlapped space d is so set up as to cause no difficulty in the turning motions of the rubber crawler. In this rubber crawler, even when the widthwise directed outer force is given to the interval of the core bars 1 . . . , the horizontal projections 5, 5 run against each other to thereby prevent the rubber crawler from sliding sideways for more than a fixed distance. Besides, the horizontal projections 5, 5 are provided on the both sides of the engaging part 3, and so do not overlap with the area wherein steel cords 7 are buried. As shown in Fig. 3B, the horizontal projections 5 are provided to the bottom face side at the about same level of the wing portions 4, and therefore are located in the vicinity of the layer of the steel cords 7, when they are embedded. Accordingly, even when the rubber crawler may be bent to the inner or outer periphery side, any big change in the overlapped space d of the horizontal projections 5, 5 does not occur.

Fig. 4A shows a rubber crawler whose inner periphery is bent and depressed at its turning point on a driving wheel or an idler wheel. At the bent portion U, the inner periphery of the rubber cralwer is pressed while the outer periphery thereof is elongated, centering the layer of steel cords. The compressive ratio increases in accordance with the distance from the layer of the steel cords toward the inner periphey, while the elongative ratio increases in accordance with the distance from the layer of the steel cords toward the outer periphery. In this figure, the interval t of the top faces of the projections 2 of the core bars becomes almost zero at the bent portion U. However, since the horizontal projections 5 are provided near the layer of the steel cords, the overlapped space d at the level portion slightly changes into a space d' at the bent portion. Fig. 4B shows that the outer periphery of the rubber crawler is partially bent and depressed (the sink phenomenon) when the rubber crawler steps on an obstacle G. In this case as well, the overlapped space slightly changes into the space d'' at the bent portion U', and therefore the overlapped space is still kept. Accordingly, in either case of the above, the horizontal projections can keep a suitable overlapped space therebetween to thereby cause no difficulty in traveling or operating motions of the rubber crawler. Though the horizontal projections are provided on the inner side of the steel cords layer in these figures, the present invention is not limited to this example, but the horizontal projections may be also provided on the outer side of the steel cords layer.

In the second embodiment of the present invention shown in Fig. 5A, the respective horizontal projections 5 . . . provided on the both side faces of the engaging part are in a right symmetrical position. Namely, the both side faces have the same construction of the horizontal projections 5 to thereby cause no mistake in arranging the core bars in manufacturing processes. In this figure, when the core bars 1a and 1a' slide sideways in the directions W and W' respectively, the horizontal projections do not run against each other between said core bars. However, they run against each other between the core bar 1a' and 1a'' to thereby prevent partial slidings.

In the third embodiment shown in Fig. 5B, a horizontal projection 5 on one side face is held by two horizontal projections 5, 5 on the facing side face to thereby prevent slidings perfectly.

Figs. 6A, 6B and 6C show the forth, the fifth and the sixth embodiments of the present invention, respectively. Each tip end of the horizontal projections is provided with a hook 5f in the same direction, or with a bi-directional hook 5f'. Those hooks engage with each other to thereby prevent the separations of the core bars and breakaways thereof from the rubber crawler. Accordingly, the durability of the rubber crawler increases.

The present invention is not limited to the foregoing embodiments, but horizontal projections may be disposed on only one side of an egaging part, as shown in Fig. 7. Bedides as shown in Fig. 8, two kinds of core bars 1g, 1h may be embedded in the rubber crawler body by turns.

## Claims

1. A core bar of a rubber crawler, having right and left wing portions (4) having an upper surface, an engaging part (3) at the longitudinal center thereof, and horizontal projections (5) provided on at least one end of the engaging part on respective widthwise side faces of a core bar,
characterized in that
said horizontal projections (5) are protruding at the same level as or below the upper surface of the wing portions in a direction perpendicular to the widthwise side faces of the core bar and are located in the vicinity of the layer of steel cords (7) of the rubber belt when embedded therein.

2. A core bar of a rubber crawler according to claim 1, wherein a thick part is formed at bottom faces of the engaging part (3) and both ends thereof on respective widthwise side faces of a core bar (1), said thick prat being lower than the wing portions, and at least one horizontal projection (5) provided on the thick part on respective widthwise side faces of a core bar.

3. A core bar of a rubber crawler according to claim 1, wherein one horizontal projection (5) is provided on each end of the engaging part (3) so as to form a pair on respective widthwise side faces of the core bar (1).

4. A core bar of a rubber crawler according to claim 1, wherein one horizontal projection (5) is provided on only one end of the engaging part (3).

5. A core bar of a rubber crawler according to claim 3 or 4, wherein the horizontal projections (5) are in a right symmetrical arrangement on respective widthwise side faces of the core bar (1).

6. A core bar of a rubber crawler according to claim 1, wherein one horizontal projection (5) is provided on one side of the engaging part (3), and a pair of horizontal projections (5) are provided on the other side thereof, on respective widthwise side faces of the core bar (1).

7. A core bar of a rubber crawler according to claim 6, wherein the horizontal projections (5) are in a right symmetrical arrangement on respective widthwise side faces of the core bar (1).

8. A core bar of a rubber crawler according to claim 1, wherein one horizontal projection (5) is provided on one end of the engaging part (3) on one widthwise side face of the core bar (1), and two horizontal projections (5) are provided on one end of the engaging part (3) on the other widthwise side face of the core bar (1), with said horizontal projections on respective widthwise side faces of the core bar disposed in the same line along the width direction of the core bar.

9. A core bar of a rubber crawler according to claim 1, wherein a hook (5f) or bi-direction hook (5f') is provided on the tip of the horizontal projection (5).

10. A core bar of a rubber crawler according to claim 9, wherein the hooks (5f, 5f') of the plural horizontal projections (5) on respective widthwise side faces of the core bar (1) are disposed so that each may protrude in the same direction or in the opposite direction.

11. A rubber crawler, wherein the core bars (1) of a rubber crawler according to any of claims 1 to 10 are embedded in the circumferential direction of the crawler body at the same intervals, and the respective horizontal projections (5) are overlapped in the intervals of the embedded core bars (1) in the width direction of the core bars and embedded in the crawler body.

12. A rubber crawler according to claim 11, wherein the horizontal projections (5) are disposed on one of an inner peripheral side of the steel cords (7) or an outer peripheral side thereof.

13. A rubber crawler according to claim 11, wherein the same core bars of a rubber crawler are continuously arrayed, or two different kinds of core bars are arrayed alternately.

14. A rubber crawler according to claim 11, wherein the core bar (1) of a rubber crawler is limited to claim 10, and hooks (5f) or/and bi-directional hooks (5f') of the overlapped horizontal projections (5) engage with each other to thereby prevent separations of the adjacent core bars (1) in the width direction thereof.

## Patentansprüche

1. Kernstab einer Gummigleiskette, welcher Kernstab aufweist einen rechten und einen linken Flügelbereich (4) mit einer Oberfläche, einen Eingriffsteil (3) an seiner Längsmitte und waagrechte Vorsprünge (5), die an wenigstens einem Ende des Eingriffsteils an jeweiligen Breitseitenflächen eines Kernstabs ausgebildet sind,
dadurch **gekennzeichnet**, daß
die waagrechten Vorsprünge (5) in der gleichen Höhe wie die oder unterhalb der Oberseite der Flügelbereiche in einer Richtung senkrecht zu den Breitseitenflächen des Kernstabs vorstehen und in der Nähe der Lage von Stahlseilen (7) des Gummigürtels angeordnet sind, wenn sie darin eingebettet sind.

2. Kernstab einer Gummigleiskette nach Anspruch 1, wobei an der Unterseite des Eingriffsteils (3) und an dessen beiden Enden an jeweiligen Breitseitenflächen des Kernstabs (1) ein dicker Bereich ausgebildet ist, welcher dicke Bereich tiefer ist als die Flügelbereiche und wobei wenigstens ein waagrechter Vorsprung (5) an dem dicken Bereich an den jeweiligen Breitseitenflächen des Kernstabs vorgesehen ist.

3. Kernstab einer Gummigleiskette nach Anspruch 1, wobei an jedem Ende des Eingriffsteils (3) ein waagrechter Vorsprung (5) derart vorgesehen ist, daß an den jeweiligen Breitseitenflächen des Kernstabs (1) ein Paar ausgebildet ist.

4. Kernstab einer Gummigleiskette nach Anspruch 1, wobei an nur einem Ende des Eingriffsteils (3) ein waagrechter Vorsprung (5) vorgesehen ist.

5. Kernstab einer Gummigleiskette nach Anspruch 3 oder 4, wobei die waagrechten Vorsprünge (5) an den jeweiligen Breitseitenflächen des Kernstabs (1) in einer symmetrischen Anordnung ausgebildet sind.

6. Kernstab einer Gummigleiskette nach Anspruch 1, wobei an jeweiligen Breitseiten des Kernstabs (1) an einer Seite des Eingriffsteils (3) ein waagrechter Vorsprung (5) vorgesehen ist und an der anderen Seite des Eingriffsteils (3) ein Paar von waagrechten Vorsprüngen (5) vorgesehen ist.

7. Kernstab einer Gummigleiskette nach Anspruch 6, wobei die waagrechten Vorsprünge (5) in einer symmetrischen Anordnung an jeweiligen Breitseitenflächen des Kernstabs (1) ausgebildet sind.

8. Kernstab einer Gummigleiskette nach Anspruch 1, wobei an einem Ende des Eingriffsteils (1) an einer Querseitenfläche des Kernstabs (1) ein waagrechter Vorsprung (5) ausgebildet ist und an einem Ende des Eingriffsteils (3) an der anderen Breitseitenfläche des Kernstabs (1) zwei waagrechte Vorsprünge (5) vorgesehen sind, wobei die waagrechten Vorsprünge (5) an den jeweiligen Breitseitenflächen des Kernstabs längs der Breitenrichtung des Kernstabs in der gleichen Linie angeordnet sind.

9. Kernstab einer Gummigleiskette nach Anspruch 1, wobei ein Haken (5f) oder ein zweiseitiger Haken (5f') an der Spitze des waagrechten Vorsprungs (5) vorgesehen ist.

10. Kernstab einer Gummigleiskette nach Anspruch 9, wobei die Haken (5f, 5f') der Mehrzahl von waagrechten Vorsprüngen (5) an den jeweiligen Breitseitenflächen des Kernstabs (1) derart angeordnet sind, daß jeder in die gleiche Richtung oder in die entgegengesetzte Richtung vorsteht.

11. Gummigleiskette, wobei die Kernstäbe (1) einer Gummigleiskette nach einem der Ansprüche 1 bis 10 in der Umfangsrichtung der Gummigleiskette in gleichen Abständen eingebettet sind und die jeweiligen waagrechten Vorsprünge (5) in den Abständen der eingebetteten Kernstäbe (1) in Breitenrichtung der Kernstäbe sich überlappen und in dem Körper der Gleiskette eingebettet sind.

12. Gummigleiskette nach Anspruch 11, wobei die waagrechten Vorsprünge (5) an einer inneren Umfangsseite oder einer äußeren Umfangsseite der Stahlseile (7) angeordnet sind.

13. Gummigleiskette nach Anspruch 11, wobei die gleichen Kernstäbe kontinuierlich regelmäßig angeordnet sind oder zwei verschiedene Arten von Kernstäben abwechselnd regelmäßig angeordnet sind.

14. Gummigleiskette nach Anspruch 11, wobei der Kernstab (1) einer Gummigleiskette gemäß Anspruch 10 ausgebildet ist und Haken (5f) oder/und zweiseitige Haken (5f') der sich überlappenden waagrechten Vorsprünge (5) miteinander in Eingriff sind, um dadurch eine Trennung benachbarter Kernstäbe (1) in deren Breitenrichtung zu verhindern.

## Revendications

1. Barre de noyau d'une chenille en caoutchouc, comportant des portions d'aile droite et gauche (4) présentant une surface supérieure, une partie de mise en prise (3) à son centre longitudinal, et des saillies horizontales (5) prévues sur au moins une extrémité de la partie de mise en prise sur des faces latérales respectives dans le sens de la largeur d'une barre de noyau,
caractérisée en ce que
lesdites saillies horizontales (5) font saillie au même niveau que ou en-dessous de la surface supérieure des portions d'aile dans une direction perpendiculaire aux faces latérales dans le sens de la largeur de la barre de noyau et sont situées au voisinage de la couche des cordes en acier (7) de la nappe d'armature en caoutchouc lorsqu'elles sont noyées dans celle-ci.

2. Barre de noyau d'une chenille en caoutchouc selon la revendication 1, où une partie épaisse est formée aux faces de fond de la partie de mise en prise (3) et aux deux extrémités de celle-ci sur des faces latérales respectives en largeur d'une barre de noyau (1), ladite partie épaisse étant plus basse que les portions d'aile, et au moins une saillie horizontale (5) est prévue sur la partie épaisse sur des faces latérales respectives en largeur d'une barre de noyau.

3. Barre de noyau d'une chenille en caoutchouc selon la revendication 1, dans laquelle une saillie horizontale (5) est prévue sur chaque extrémité de la partie de mise en prise (3) de façon à former une paire sur des faces latérales respectives en largeur de la barre de noyau (1).

4. Barre de noyau d'une chenille en caoutchouc selon la revendication 1, dans laquelle une saillie horizontale (5) est prévue sur seulement une extrémité de la partie de mise en prise (3).

5. Barre de noyau d'une chenille en caoutchouc selon la revendication 3 ou 4, dans laquelle les saillies horizontales (5) se trouvent dans un agencement symétrique droit sur des faces latérales respectives en largeur de la barre de noyau (1).

6. Barre de noyau d'une chenille en caoutchouc selon la revendication 1, dans laquelle une saillie horizontale (5) est prévue sur un côté de la partie de mise en prise (3), et une paire de saillies horizontales (5) est prévue de l'autre côté de celle-ci, sur des faces latérales respectives en largeur de la barre de noyau (1).

7. Barre de noyau d'une chenille en caoutchouc selon la revendication 6, dans laquelle les saillies horizontales (5) se trouvent dans un agencement symétrique droit sur des faces latérales respectives en largeur de la barre de noyau (1).

8. Barre de noyau d'une chenille en caoutchouc selon la revendication 1, dans laquelle une saillie horizontale (5) est prévue sur une extrémité de la partie de mise en prise (3) sur une face latérale en largeur de la barre de noyau (1), et deux saillies horizontales (5) sont prévues sur une extrémité de la partie de mise en prise (3) sur l'autre face latérale en largeur de la barre de noyau (1), lesdites saillies horizontales sur les faces latérales respectives en largeur de la barre de noyau étant disposées sur la même ligne dans la direction en largeur de la barre de noyau.

9. Barre de noyau d'une chenille en caoutchouc selon la revendication 1, dans laquelle un crochet (5f) ou un crochet bi-directionnel (5f') est prévu sur la pointe de la saillie horizontale (5).

10. Barre de noyau d'une chenille en caoutchouc selon la revendication 9, dans laquelle les crochets (5f, 5f') de la pluralité des saillies horizontales (5) sur les faces latérales respectives en largeur de la barre de noyau (1) sont disposés de façon que chacun puisse faire saillie dans la même direction ou dans la direction opposée.

11. Chenille en caoutchouc, dans laquelle les barres de noyau (1) d'une chenille en caoutchouc en accord avec l'une des revendications 1 à 10 sont noyées dans la direction circonférentielle du corps de chenille à des intervalles identiques, et les saillies horizontales respectives (5) se chevauchent dans les intervalles des barres de noyau noyées (1) dans le sens de la largeur des barres de noyau et sont noyées dans le corps de chenille.

12. Chenille en caoutchouc selon la revendication 11, dans laquelle les saillies horizontales (5) sont disposées soit sur un côté périphérique intérieur des cordes en acier (7) soit sur un côté périphérique extérieur de celles-ci.

13. Chenille en caoutchouc selon la revendication 11, dans laquelle les mêmes barres de noyau d'une chenille en caoutchouc sont disposées continuellement, ou bien deux types différents de barres de noyau sont disposés en alternance.

14. Chenille en caoutchouc selon la revendication 11, dans laquelle la barre de noyau (1) d'une chenille en caoutchouc est limitée à la revendication 10, et des crochets (5f) et/ou des crochets bi-directionnels (5f') des saillies horizontales (5) qui se chevauchent viennent en prise les uns avec les autres pour empêcher ainsi des séparations des barres de noyau adjacentes (1) dans le sens de la largeur de celles-ci.
